# EUROPEAN PATENT APPLICATION

(11) **EP 4 592 857 A1**
(43) Date of publication of application: **30.07.2025**
(21) Application number: 22962419.2
(22) Date of filing: 20.10.2022
(51) Int. Cl.: G06F 12/14

(54) **MEMORY ACCESS CONTROL METHOD AND APPARATUS**

(71) Applicant: Shenzhen Yinwang Intelligent Technologies Co., Ltd., Shenzhen, Guangdong 518129 (CN)
(72) Inventor: CAO, Jianlong, Shenzhen, Guangdong 518129 (CN); TAO, Zhe, Shenzhen, Guangdong 518129 (CN); CUI, Aiguo, Shenzhen, Guangdong 518129 (CN)
(74) Representative: Pfenning, Meinig & Partner mbB
(86) International application number: PCT/CN2022/126519
(87) International publication number: WO 2024/082232

(57) **Abstract**

This application discloses a memory access control method and an apparatus, to implement memory partition isolation, reduce software overheads, and lower a memory isolation granularity. The method includes: configuring a memory tag for at least one memory domain; before any one of the at least one memory domain such as a first memory domain is run, if the first memory domain is configured with a memory tag, releasing the memory tag of the first memory domain; and running the first memory domain after determining that the first memory domain does not have a memory tag. In this solution, an application is not modified intrusively, program code does not need to be recompiled, and a size of the application does not need to be increased, so that implementation costs can be reduced. Compared with another memory isolation solution implemented by software or hardware, this solution can reduce performance overheads, for example, reduce overheads of switching between a user mode and a kernel context, and can implement fine-grained memory access control.

## Description

### TECHNICAL FIELD

This application relates to the field of computer security, and in particular, to a memory access control method and an apparatus.

### BACKGROUND

During application development, software reuse is one of the commonly used technical means. To be specific, developers develop their own components and reuse open-source or third-party software libraries as much as possible, that is, "do not reinvent the wheel". This reduces a workload of the developers and improves software development efficiency. Although the software reuse provides convenience for the developers, there are some security risks in the software reuse. In an application developed based on the software reuse, each component can view complete application address space, that is, each component can access a memory of another component, causing many problems such as malicious access, vulnerability exploitation, and leakage of sensitive information. To avoid these security risks, in a conventional technology, sensitive assets (including data, code, and the like) may be partitioned, that is, these sensitive assets are isolated, and fault and vulnerability impact of the another component are isolated from the partition, to ensure confidentiality and integrity of the partition.

However, in the conventional technology, a memory is usually partitioned in a software manner or a hardware manner. The software manner increases extra overheads, and the hardware manner depends on fixed hardware and has a problem of a large memory isolation granularity.

### SUMMARY

This application provides a memory access control method and an apparatus, to implement memory partition isolation, reduce software overheads, and lower a memory isolation granularity.

According to a first aspect, a memory access control method is provided and applied to a processor, for example, ARM or Cortex-A. The method includes: configuring a memory tag for at least one memory domain, where a memory domain configured with a memory tag is only allowed to be accessed by an instruction that is associated with an address tag and for which the address tag matches the memory tag; and before a first memory domain in the at least one memory domain is run, if the first memory domain is configured with a memory tag, releasing the memory tag of the first memory domain, where the first memory domain is any one of the at least one memory domain; or running the first memory domain after determining that the first memory domain does not have a memory tag.

In the foregoing solution, the memory tag is first allocated to the at least one memory domain, and before the first memory domain in the at least one memory domain is run, it is first ensured that the first memory domain does not have a memory tag, and then the first memory domain is run, to ensure that the first memory domain can be accessed by a component of the first memory domain. In addition, in this embodiment of this application, only the memory tag is configured, and no address tag is configured, so that a component domain corresponding to the first memory domain cannot directly access another memory domain, to implement inter-domain access isolation. In this solution, an application is not modified intrusively, program code does not need to be recompiled, and a size of the application does not need to be increased, so that implementation costs can be reduced. Compared with another memory isolation solution implemented by software or hardware, this solution can reduce performance overheads, for example, reduce overheads of switching between a user mode and a kernel context; and this solution can reach a memory partitioning granularity of 16 bytes, and can implement fine-grained memory access control.

In a possible design, during specific implementation, configuring the memory tag for the at least one memory domain may be randomly generating the memory tag.

This design can reduce a probability of third-party code guessing the memory tag and can improve security of memory isolation.

In a possible design, during specific implementation, configuring the memory tag for the at least one memory domain may be configuring a memory tag for a memory domain that is in the at least one memory domain and that stores a sensitive asset.

This design can ensure security of the sensitive asset, avoid a waste of the memory tag, and improve utilization of a memory tag resource.

In a possible design, after the first memory domain is run, a first instruction from the first memory domain may be further detected, where the first instruction is used to access a second memory domain; the first memory domain is configured with a memory tag; a memory tag of the second memory domain is released; the first instruction is executed; and an execution result of the first instruction is returned to the first memory domain.

This design implements cross-domain access by using a tag reconfiguration mechanism, and can improve security of the cross-domain access.

In a possible design, before the first instruction is executed, it may be further determined that the memory tag configured for the first memory domain is the randomly generated memory tag.

This design can avoid a case in which the third-party code bypasses a tag reconfiguration process to directly access the second memory domain, and further improve security of the cross-domain access.

In a possible design, before the first instruction is executed, an address of the first memory domain may be further stored. When the execution result of the first instruction is returned to the first memory domain, the execution result of the first instruction may be returned to the first memory domain based on the stored address.

In a possible design, after the first instruction is executed, a memory tag may be further configured for the second memory domain, and the memory tag of the first memory domain is released.

This design can ensure that the execution result is correctly returned to the first memory domain, and improve reliability of the cross-domain access.

In a possible design, before the first memory domain is run, whether a memory tag extension MTE instruction exists in the first memory domain may be further detected through offline or online binary scanning; and if the memory tag extension MTE instruction exists, the MTE instruction is cleared, where the MTE instruction includes one or more of a load allocation tag LDG instruction, a load tag multiple LDGM instruction, a store allocation tag STG instruction, a store allocation tag and zeroing STZG instruction, a store allocation tag and pair register STGP instruction, and a store tag multiple STGM instruction.

This design can avoid a case in which the third-party code reads a valid memory tag or sets, without authorization, a memory tag by using the MTE instruction, so that an address tag is obtained by using the memory tag to implement unauthorized access to a memory domain. This further improves security and reliability of memory access.

According to a second aspect, a control apparatus is provided, including a module/unit/technical means configured to perform the method according to the first aspect or any possible design of the first aspect.

For example, the apparatus may include:
a configuration module, configured to: configure a memory tag for at least one memory domain, where a memory domain configured with a memory tag is only allowed to be accessed by an instruction that is associated with an address tag and for which the address tag matches the memory tag; and before a first memory domain in the at least one memory domain is run, if the first memory domain is configured with a memory tag, release the memory tag of the first memory domain, where the first memory domain is any one of the at least one memory domain; or run the first memory domain after determining that the first memory domain does not have a memory tag.

In a possible design, the configuration module may be configured to randomly generate the memory tag.

In a possible design, the configuration module may be used to configure a memory tag for a memory domain that is in the at least one memory domain and that stores a sensitive asset.

In a possible design, the apparatus may further include:
a gateway module, configured to: detect a first instruction from the first memory domain, where the first instruction is used to access a second memory domain; configure a memory tag for the first memory domain; release a memory tag of the second memory domain; execute the first instruction; and return an execution result of the first instruction to the first memory domain.

In a possible design, the gateway module may be further configured to: before executing the first instruction, determine that the memory tag configured for the first memory domain is the randomly generated memory tag.

In a possible design, the gateway module may be further configured to: before executing the first instruction, store an address of the first memory domain; and when returning the execution result of the first instruction to the first memory domain, return the execution result of the first instruction to the first memory domain based on the stored address.

In a possible design, the gateway module may be further configured to: configure a memory tag for the second memory domain after executing the first instruction; and release the memory tag of the first memory domain.

In a possible design, the configuration module may be further configured to: before the first memory domain is run, detect, through offline or online binary scanning, whether a memory tag extension MTE instruction exists in the first memory domain; and if the MTE instruction exists, clear the MTE instruction, where the MTE instruction includes one or more of a load allocation tag LDG instruction, a load tag multiple LDGM instruction, a store allocation tag STG instruction, a store allocation tag and zeroing STZG instruction, a store allocation tag and pair register STGP instruction, and a store tag multiple STGM instruction.

According to a third aspect, a control apparatus is provided, including at least one processor and an interface circuit. The interface circuit is configured to: receive a signal from another apparatus different from the apparatus and transmit the signal to the processor, or send a signal from the processor to another apparatus different from the apparatus. The processor is configured to implement the method according to the first aspect or any possible design of the first aspect by using a logic circuit or executing a code instruction.

According to a fourth aspect, a computer-readable storage medium is provided. The readable storage medium is configured to store instructions. When the instructions are executed, the method according to the first aspect or any possible design of the first aspect is implemented.

According to a fifth aspect, a computer program product is provided. The computer program product stores instructions. When the instructions are run on a computer, the computer is enabled to perform the method according to the first aspect or any possible design of the first aspect.

### BRIEF DESCRIPTION OF DRAWINGS

FIG. 1 is a diagram of memory access in a software reuse scenario;
FIG. 2 is a flowchart of a memory access control method according to an embodiment of this application;
FIG. 3 is a diagram of a memory access mechanism of MTE;
FIG. 4 is a diagram of a memory tag;
FIG. 5 is a diagram in which a tag allocator allocates a memory tag and releases the memory tag;
FIG. 6 is a flowchart of a cross-domain access method according to an embodiment of this application;
FIG. 7 is a diagram of an example of cross-domain access;
FIG. 8 is a flowchart of an example of cross-domain access;
FIG. 9 is a diagram of a control apparatus according to an embodiment of this application; and
FIG. 10 is a diagram of another control apparatus according to an embodiment of this application.

### DESCRIPTION OF EMBODIMENTS

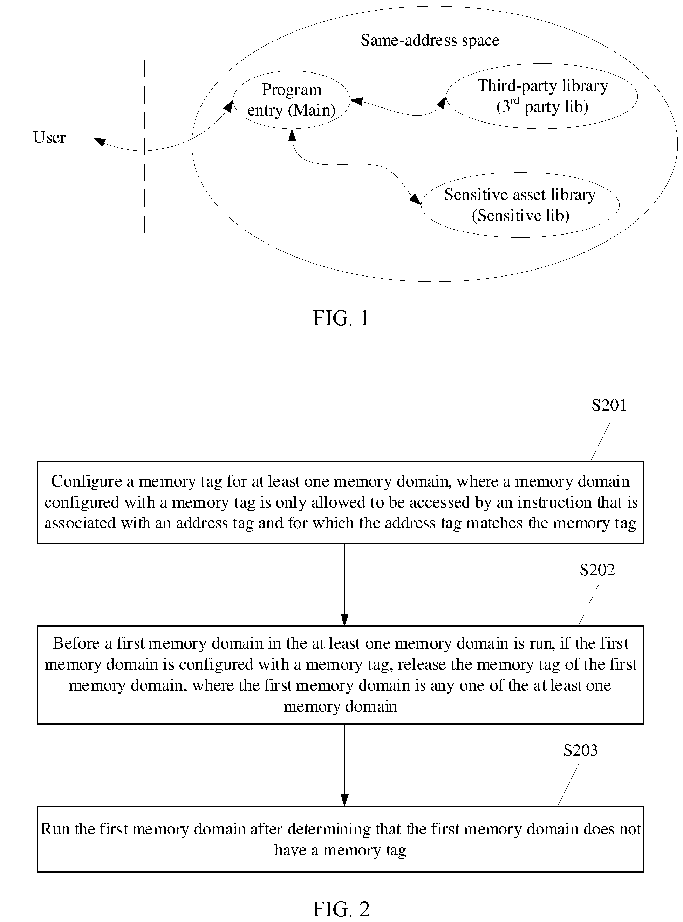

In a software reuse scenario, a trusted component and an untrusted component use same address space of a memory. For example, FIG. 1 is a diagram of memory access in a software reuse scenario. A sensitive asset library stores data and code of the trusted component, and a third-party library stores data and code of the untrusted component. Any user (including an unauthorized user) may send a request through a program entry to access the third-party library and the sensitive resource library, and may also maliciously construct memory corruption (Memory Corruption), for example, maliciously modifying data in a valid memory block, or out-of-bounds access (accessing a memory block but exceeding an authorized access range).

In good software engineering, sensitive data and code are partitioned, that is, these sensitive assets are isolated, and fault and vulnerability impact of another component are isolated from a partition, to ensure confidentiality and integrity of the partition.

The following describes several memory isolation technologies.
I. Software-based fault isolation (Software-Based Fault Isolation, SFI): Boundary check is performed on memory access of an untrusted component, that is, check is added before each memory access (for example, before a read/write instruction is executed, whether an address in the instruction is valid is checked) to prevent access to a memory of another component. The boundary check may be inserted by a compiler or in a binary rewriting manner. Insertion of the boundary check introduces extra execution overheads in the untrusted component and also requires extra overheads to prevent control flow hijacking that may bypass the boundary check.
   This manner does not depend on hardware, and supports a microprocessor (Advanced RISC Machine, ARM) architecture and a Cortex-A (Cortex-A) architecture. In addition, memory partitioning can support a fine granularity of 16 B to 64 B. Therefore, memory overheads occupied by an application are low. However, this manner requires instruction translation and has great impact on performance.
II. Hardware fault isolation: A hardware security mechanism such as a hardware memory protection unit (Memory Protection Unit, MPU) is used, so that memory access is translated by hardware, and an unauthorized operation is captured by the hardware. In this way, extra performance overheads are not generated in an untrusted component. However, although no extra overheads are generated in the component, switching between component boundaries through virtualization or kernel capturing incurs extra overheads, depending on different hardware architectures.
   Because the MPU is used for memory isolation, this manner has less impact on performance than the SFI. In addition, this manner may support an ARM architecture, and memory partitioning can support a fine granularity of 16 B to 64 B. Therefore, memory overheads are low. However, this manner depends on hardware and does not support Cortex-A.
III. Secure, efficient in-process isolation with protection keys (Secure, Efficient In-process Isolation with Protection Keys (MPK), ERIM) is an isolation technology based on an x86 architecture and depends on x86 instruction set architecture (Instruction Set Architecture, ISA) extension. In this solution, each virtual page is marked with a 4-bit domain identity document (Identity Document, ID) by using a protection key (Memory protection key, MPK), to divide address space of a process into a maximum of 16 non-intersecting domains. A local special register of each logical kernel, for example, a protection key register user (Protection Key Register User, PKRU), determines a domain that can be read or written by the kernel. Switching between domain permission requires writing the PKRU in user space. This takes only 11,260 cycles on a current Intel central processing unit (Central Processing Unit, CPU), corresponding to overheads of 0.07% to 1.0% per 100,000 switches/second on a 2.6 GHz CPU. This indicates that throughput overheads of NGINX (NGINX is a name of a server) are a maximum of 4.8%.

An MPK technology mainly includes the following content:
1. The MPK technology provides 16 protection keys (Protection Keys, which may be briefly referred to as Keys) for each process. Therefore, address space of a process can be divided into a maximum of 16 protection regions. APKRU register stores specific access permission of each key.
2. When access permission of a domain needs to be changed, only a user-mode instruction (for example, write data to user page key register (Write Data to User Page Key Register, WRPKRU), or 11 to 260 cycles (cycles)) is needed, without system calling, page table modification, translation detection buffer (Translation Lookaside Buffer, TLB) refreshing, or the like.

The following describes an ERIM technology.
1. A user-mode process is divided into two parts: a trusted domain and an untrusted domain.
   It is ensured that the untrusted domain is always allowed to be accessed and the trusted domain is not accessed by the untrusted domain. However, the untrusted domain can obtain access permission by jumping to a call gate (call gate) of the trusted domain.
2. One of the difficulties to be resolved by the ERIM is to prevent the untrusted domain from modifying memory domain access permission by using a WRPKRU instruction. The ERIM depends on binary inspection (Binary Inspection) to ensure that only a secure WRPKRU appears in an executable page.

In this mode, the MPK technology using X86 seldom affects running performance of an untrusted component or a trusted component. However, the MPK technology depends on an X86 hardware architecture, that is, the ERIM technology cannot be used in an ARM architecture. Similarly, because a page is used as a unit, a page granularity can reach only 4 KB, and finergrained memory isolation cannot be performed.

IV. A hardware-based MPU memory protection unit isolates components of a same process by using a protected environment keystone for a microcontroller unit (Protected Environment Keystone for MCU, PEKM) technology.

An MPU technology mainly includes the following content:
1. An MPU on a microcontroller unit (Microcontroller Unit, MCU) provides a set (set) of 16 protection domains (protection regions). Therefore, a task can support division into 16 protection domains. A PKRU register stores specific access permission of each key.
2. When access permission of a domain needs to be changed, only a kernel-mode instruction (such as mtcr) is needed to generate a context switch through system calling.

A PEKM technology mainly includes the following content:
1. A task is executed in a kernel mode, which causes a spatial isolation problem for a same process.
2. It is ensured that a task (untrusted) is isolated bidirectionally from a kernel (trusted). However, the task can obtain access permission by jumping to a call gateway of the kernel.
3. One of the difficulties to be resolved by the PEKM is to prevent a task from modifying permission of a protection region by using a sensitive instruction such as mtcr. The PEKM depends on binary inspection (Binary Inspection) to ensure that a system instruction does not appear in the task.

In this mode, the PEKM technology depends on MPU hardware. The MPU sets a memory domain to switch a memory of an untrusted component and a memory of a trusted component. A memory granularity of the MPU can be 64 bytes, but the MPU is only in some ARM architectures (such as ARM v8R or v8M). In Cortex-A, the PEKM also proposes use of a memory management unit (Memory Management Unit, MMU) for protection, but a granularity of the PEKM is still a page granularity, namely, 4 KB.

Table 1 summarizes advantages and disadvantages of the four memory isolation technologies.

**Table 1**

| Memory isolation technology | Performance | Hardware | ARM architecture | Cortex-A | Fine granularity (16 B to 64 B) | Memory overhead |
|---|---|---|---|---|---|---|
| SFI | Instruction translation, and great impact | Not dependent | Supported | Supported | Supported | Low |
| MPU | Hardware memory protection, and small impact | Dependent | Supported | Not supported | Supported | Low |
| ERIM | Intel MPK, and small impact | Dependent | Not supported | Not supported | Not supported | Low |
| PEKM | Same as the MPU | Dependent | Supported | Supported | A: not supported | Low |

To resolve the foregoing one or more technical problems, a memory access control solution in this application is provided. In this application, memory partitioning is implemented by using a memory tag extension (Memory Tag Extension, MTE) technology. This prevents an untrusted component from accessing a memory of a trusted component, reduces software overheads, reduces dependency on fixed hardware, and reduces a memory isolation granularity.

The following describes in detail embodiments of this application with reference to the accompanying drawings. It may be understood that the technical solutions provided in embodiments of this application may be applied to an architecture such as an ARM or a Cortex-A, or another type of processor. This is not limited in this application.

FIG. 2 is a flowchart of a memory access control method according to an embodiment of this application. The method may be performed by a processor, and the processor is, for example, ARM or Cortex-A. This is not limited in this application. The method includes the following steps.

S201: The processor configures a memory tag for at least one memory domain, where a memory domain configured with a memory tag is only allowed to be accessed by an instruction that is associated with an address tag and for which the address tag matches the memory tag.

In this embodiment of this application, the processor may configure the memory tag for the at least one memory domain by using a memory tag extension (Memory Tag Extension, MTE) technology.

For ease of understanding, the following first describes the MTE technology.

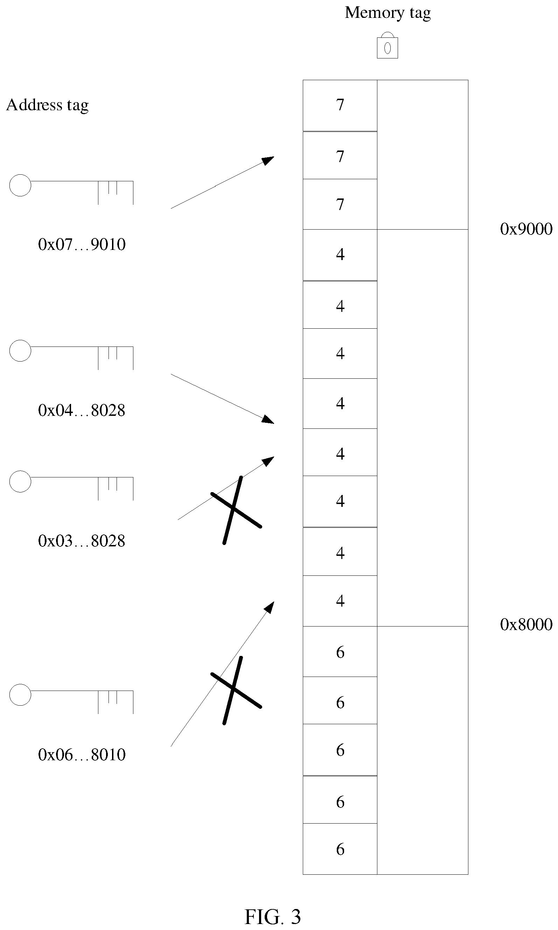

MTE is an instruction set extension introduced in an ARM v8.5-A architecture. The MTE implements a memory access lock (lock)&key (key) mechanism, and may provide fine-grained physical memory access control. To be specific, memory access can be authorized only when a key value in a pointer is the same as a lock value in a physical memory; otherwise, an exception is triggered. FIG. 3 is a diagram of a memory access mechanism of the MTE.

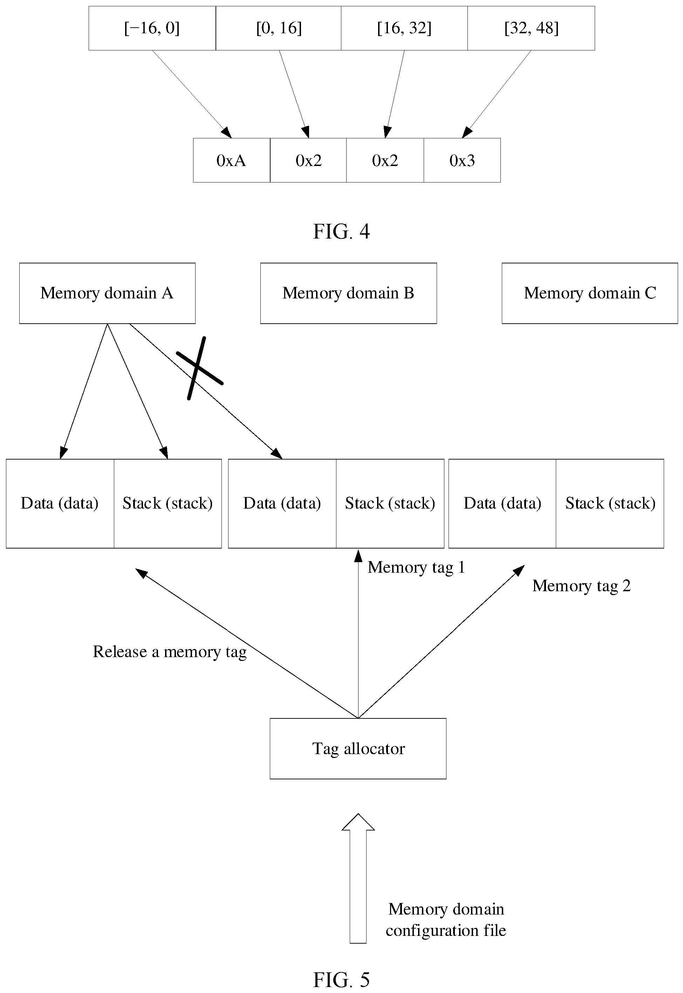

In the MTE, a key is also referred to as an address tag (address tag), a logical tag (logical tag), or a pointer tag, and a lock is also referred to as a memory tag (memory tag). Each memory tag is 4 bits (bits) in size and is associated with a 16-byte physical memory. During specific implementation, a plurality of different 16-byte physical memories may be associated with a same memory tag or different memory tags. This is not limited in this application. FIG. 4 is a diagram of a memory tag, where a memory tag corresponding to a physical memory [-16, 0] is 0xA, a memory tag corresponding to a physical memory [32, 48] is 0x3, and physical memories [0, 16] and [16, 32] correspond to a same memory tag, namely, 0x2. It may be understood that the memory tag is stored in a special memory area, and a common memory read/write instruction cannot access the memory area. Therefore, the MTE provides special instructions such as a load allocation tag (Load Allocation Tag, LDG) instruction and a store allocation tag (Store Allocation Tag, STG) instruction to update the area.

For the MTE, based on a top byte ignore (Top Byte Ignore, TBI) feature of the ARM, most significant bits [59: 56] of the access address are used as an address tag identifier pointer. In this case, there may be a maximum of 16 different address tags.

It may be understood that when the processor accesses a memory, an access instruction (for example, a read instruction or a write instruction) carries an access address, and the access address is associated with an address tag, for example, most significant bits [59: 56] of the access address are an address tag.

A memory domain (domain) may also be referred to as a memory area. During specific implementation, the processor may divide a memory into a plurality of different memory domains based on information (for example, a memory domain configuration file) input by a user. The memory domain is used to mark, for example, a memory range of a third-party library or a sensitive asset.

In this embodiment of this application, the processor may allocate the memory tag to the at least one memory domain by using a tag allocator. The tag allocator is an allocator defined by the MTE technology. Different from a common memory allocator, the tag allocator provides tag allocation for a memory and is configured to taint (taint) a tag of a given memory (that is, allocate a memory tag to the given memory). The MTE allocation can also provide an MTE instruction to modify the memory tag.

It may be understood that the MTE is program code in essence, and when running the program code, the processor implements functions such as allocating a memory tag and modifying a memory tag.

In a possible design, when configuring the memory tag for the at least one memory domain, the processor may randomly generate the memory tag. This can reduce a probability of third-party code guessing the memory tag and can improve security of memory isolation.

It may be understood that, from a perspective of an application developer, the third-party code in this specification is code that is not developed by the application developer (for example, code developed by an unauthorized user (that is, usually referred to as a "hacker")), but does not include a system trusted base (for example, system kernel code or code for implementing the method in this application). In a possible design, when configuring the memory tag for the at least one memory domain, the processor may configure a memory tag for only a memory domain that is in the at least one memory domain and that stores the sensitive asset.

For example, the at least one memory domain includes a first memory domain and a second memory domain, where the first memory domain stores the sensitive asset, and the second memory domain stores a non-sensitive asset. In this case, a memory tag may be configured for the first memory domain, but a memory domain tag is not configured for the second memory domain. The reason why a memory tag may not be configured for the second memory domain is that the second memory domain stores the non-sensitive asset and is always allowed to be accessed.

The asset includes but is not limited to code and/or data.

This can avoid a waste of the memory tag and improve utilization of a memory tag resource.

S202: Before the first memory domain in the at least one memory domain is run, if the first memory domain is configured with the memory tag, release the memory tag of the first memory domain, where the first memory domain is any one of the at least one memory domain.

It may be understood that, when an application is run, code is run (or executed) in essence to process data. It can be learned from the foregoing that, in an application developed based on software reuse, one application may include a plurality of components. Code and data corresponding to each component may be stored in different memory domains. Therefore, when a component of an application is run, it may be understood that code in a memory domain corresponding to the component is run (or executed), or a memory domain corresponding to the component is run. Correspondingly, in this embodiment of this application, running the first memory domain may be understood as running code in the first memory domain. Before the first memory domain is run, it indicates before a first piece of code of the first memory domain is run.

It should be emphasized that, in this embodiment of this application, a solution for implementing memory isolation by using the MTE technology is different from a function defined in the MTE technology.

It can be learned from the foregoing descriptions of the MTE technology that, for the MTE technology, access is allowed when the address tag (key) and the memory tag (lock) are configured. Therefore, code of an application needs to be modified, so that the code includes an address tag in an access instruction when accessing a memory domain.

However, in this embodiment of this application, code of an application does not need to be modified, the address tag (key) does not need to be configured, the tag allocator does not need to sense the application, and the tag allocator only needs to use a technology related to the memory tag in the MTE technology. Specifically, the memory tag is first configured for the at least one memory domain (that is, locking). Before any memory domain (for example, the first memory domain) in the at least one memory domain is run, it is ensured that the memory domain does not have a memory tag (that is, is in an unlocked state). **In** this way, after the memory domain is run, a component corresponding to the memory domain can access (including reading and/or writing) data in the memory domain, and when the memory domain accesses another domain, because the another memory domain is configured with a memory tag (that is, in a locked state) and the memory domain does not have an address tag (because the tag allocator does not configure an address tag), an exception is triggered due to a tag mismatch (tag mismatch), and the another memory domain cannot be directly accessed.

For example, with reference to FIG. 5, the tag allocator configures a memory tag 0, a memory tag 1, and a memory tag 2 for a memory domain A, a memory domain B, and a memory domain C respectively. Before the memory domain A is run, the memory tag 0 first releases the memory tag (lock) of the memory domain A. In this way, when the memory domain A is run, the memory domain A can only access the memory domain A, and cannot directly access another memory domain (as shown in FIG. 5, the memory domain A fails to access the memory domain B).

Correspondingly, to ensure that the first memory domain does not have a memory tag when the first memory domain is run, before the first memory domain is run, it is required to determine whether the first memory domain has a memory tag. If the first memory domain has a memory tag, after the memory tag of the first memory domain is released, S203 is performed; or if the first memory domain does not have a memory tag (for example, the first memory domain stores the non-sensitive asset, and in step S21, a memory tag is configured only for a memory domain that stores the sensitive asset), S203 may be directly performed.

Optionally, releasing the memory tag of the first memory domain by the processor may be implemented by using hardware or may be set by using an STG instruction.

S203: The processor runs the first memory domain after determining that the first memory domain does not have a memory tag.

Running the first memory domain means that the processor starts to read and execute the code in the first memory domain, to implement a function of a component corresponding to the first memory domain. It may be understood that when the code in the first memory domain is executed, an instruction may be generated. The instruction may be a read instruction and/or a write instruction, or may be another instruction. This is not limited in this application.

In the foregoing solution, the processor first allocates the memory tag to the at least one memory domain, and before running the first memory domain in the at least one memory domain, the processor first ensures that the first memory domain does not have a memory tag, and then runs the first memory domain, to ensure that the first memory domain can be accessed by the component of the first memory domain. In addition, in this embodiment of this application, only the memory tag is configured, and no address tag is configured, so that a component domain corresponding to the first memory domain cannot directly access another memory domain, to implement inter-domain access isolation.

The foregoing solution has at least the following advantages.
(1) An application is not modified intrusively, program code does not need to be recompiled, and a size of the application does not need to be increased, so that implementation costs can be reduced.
(2) Compared with another memory isolation solution implemented by software or hardware, this solution uses a combination of software and hardware (for example, the tag allocator and an API gateway are implemented by using software, and the MTE instruction and the memory tag are implemented by using hardware), so that performance overheads can be reduced, for example, overheads of switching between a user mode and a kernel context can be reduced.
(3) Memory partitioning is implemented by using the MTE technology. This can reach a granularity of 16 bytes and implements fine-grained memory access control.

In a possible design, the processor may further implement cross-domain access by reconfiguring a memory tag.

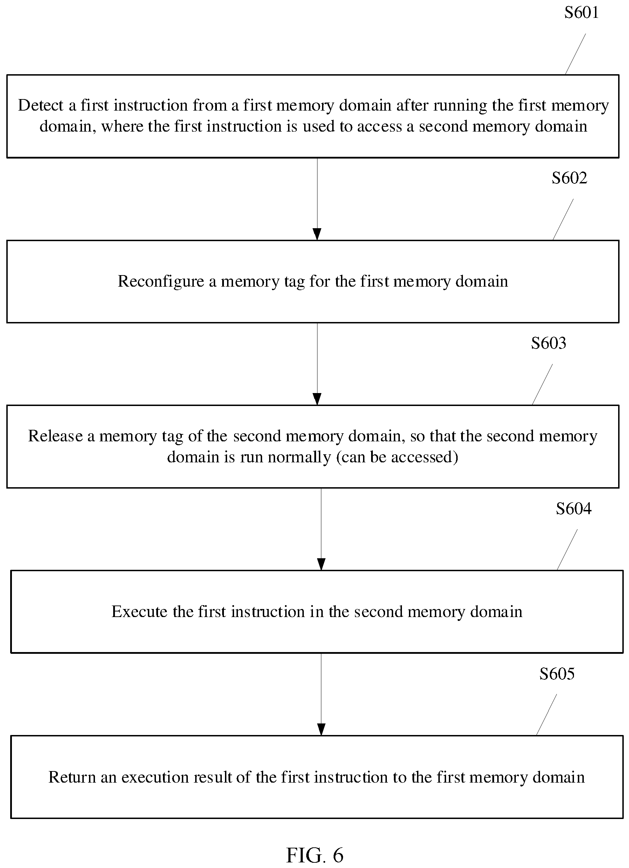

With reference to FIG. 6, an example in which the first memory domain accesses the second memory domain (that is, after the first memory domain is run, an instruction for accessing the second memory domain is generated in the first memory domain) is used. An embodiment of this application further provides a cross-domain access method, including the following steps.

S601: The processor detects a first instruction from the first memory domain after running the first memory domain, where the first instruction is used to access the second memory domain.

S602: The processor reconfigures a memory tag for the first memory domain (because the tag of the first memory domain has been released before the first memory domain is run).

Optionally, the processor is a random memory tag of the first memory domain.

S603: The processor releases a memory tag of the second memory domain, so that the second memory domain is run normally (can be accessed).

S604: The processor executes the first instruction in the second memory domain.

S605: The processor returns an execution result of the first instruction to the first memory domain.

To be specific, during cross-domain access, before an accessed domain (for example, the second memory domain) executes a read/write instruction from an access domain (for example, the first memory domain), the access domain needs to be locked again, and the accessed domain needs to be unlocked, so that the accessed domain can be accessed, and it is ensured that only a running memory domain can be accessed.

During specific implementation, the processor may implement a cross-domain access control process by configuring an application programming interface (Application Programming Interface, API) gateway (Gateway). It may be understood that the API gateway may also be software code in essence. When the API gateway runs, a function related to the cross-domain access is implemented, for example, detecting the first instruction, controlling the tag allocator to reconfigure a memory tag (for example, an operation such as reconfiguring a tag for the first memory domain and releasing a tag for the second memory domain), and controlling execution of the first instruction. If there is cross-domain access that bypasses the API gateway, an exception is triggered due to a tag mismatch.

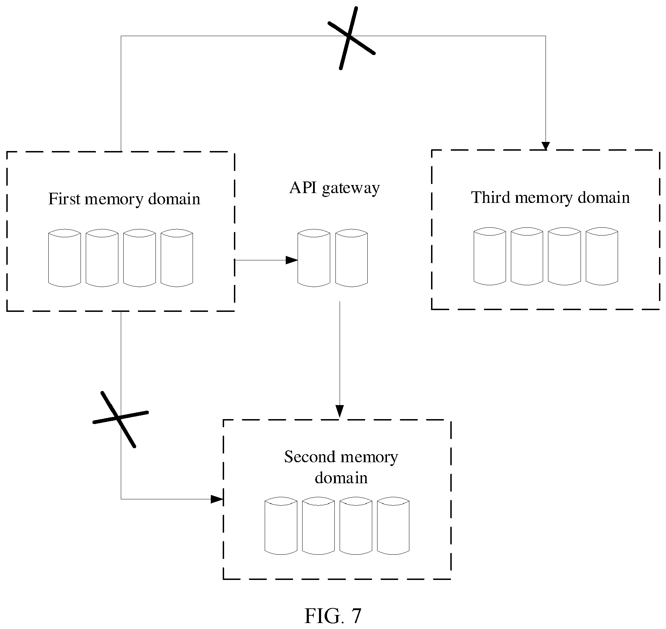

For example, with reference to FIG. 7, when the first memory domain directly accesses the second memory domain and a third memory domain, there is a cross-domain access failure because the second memory domain and the third memory domain have memory tags and the first memory domain cannot provide a matched address tag. When the first memory domain accesses the second memory domain by using the API gateway, the API gateway may cooperate with the tag allocator to reconfigure a memory tag, so that the first memory domain accesses the second memory domain.

In this design, cross-domain access can be implemented through cooperation between the API gateway and the tag allocator. This improves security of the cross-domain access.

In a possible design, before executing the first instruction, the processor may further verify whether the memory tag of the first memory domain is the randomly generated memory tag. When the memory tag configured for the first memory domain is the randomly generated memory tag, the processor executes the first instruction; otherwise, the processor does not execute the first instruction.

This can prevent the third-party code from bypassing step S602 to directly access the second memory domain, and further improve security of the cross-domain access.

In a possible design, before executing the first instruction, the processor may further store an address of the first memory domain. When returning the execution result of the first instruction to the first memory domain, the processor returns the execution result of the first instruction to the first memory domain based on the stored address.

This can ensure that the execution result is returned to the first memory domain, and improve reliability of the cross-domain access.

In a possible design, after executing the first instruction, the processor may further reconfigure a memory tag for the second memory domain, that is, re-lock the second memory domain, and release the memory tag of the first memory domain, so that the execution result can be returned to the first memory domain. Optionally, when reconfiguring the memory tag for the second memory domain, the processor may randomly generate the memory tag.

This can ensure that the execution result is returned to the first memory domain, prevent another memory domain or third-party code from taking an opportunity to access the second memory domain, and therefore improve reliability of the cross-domain access.

In a possible design, after detecting the first instruction from the first memory domain and before configuring the memory tag for the first memory domain, the processor may further acquire an atomic lock, where the atomic lock is used to ensure that the API gateway has only one switching subject (namely, one memory domain that needs to be locked and one memory domain that needs to be unlocked) at a same moment; and after executing the first instruction, the processor releases the atomic lock. This avoids a concurrency problem in cross-domain access process.

It may be understood that acquiring the atomic lock refers to a process of executing an instruction "Acquire_lock", where a meaning of the instruction "Acquire_lock" is acquiring a lock of a specified value in this step. A lock may be used to prevent concurrent modification of a resource (This step acquires a lock on a specified value. You can use locks to prevent concurrent modification of resources).

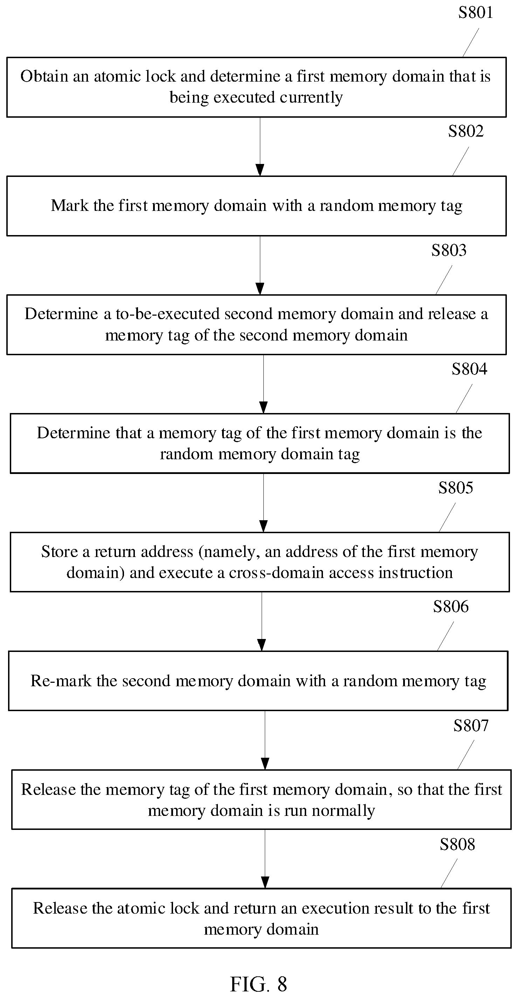

For ease of understanding, a detailed example of cross-domain access is illustrated herein. With reference to FIG. 8, the cross-domain access includes the following steps.

S801: Acquire an atomic lock and determine a memory domain that is being executed currently, for example, a first memory domain (in running, there is no memory tag).

S802: A processor marks (that is, locks) the first memory domain with a random memory tag.

S803: The processor determines a to-be-executed memory domain, for example, a second memory domain, and releases a memory tag of the second memory domain.

S804: The processor checks whether a memory tag of the first memory domain is a random memory domain tag, and continues a subsequent procedure after the check succeeds.

S805: The processor stores a return address (namely, an address of the first memory domain), and executes a cross-domain access instruction (for example, a first instruction).

S806: The processor re-marks (that is, locks) the second memory domain with a random memory tag.

S807: The processor releases the memory tag of the first memory domain, so that the first memory domain is run normally.

S808: The processor releases the atomic lock, and returns an execution result to the first memory domain.

It may be understood that, when hardware (such as ARM) supports pointer authentication (pointer authentication, PAC), the PAC needs to be enabled to further ensure control flow integrity.

During specific implementation, the foregoing procedure may be implemented by running code.

An example of code corresponding to step S801 to step S808 is as follows:

| |
|---|
| ```
      api_gateway(service_id) {
           atomic_lock()
           Domain_t *untrust_domain = get_cur_domain() // S801
           tag = memtaint(untrust_domain.addr, untrust_domain.size, PROT_RNG) // S802
           Domain_t trust_domain = get_trust_domain() // S803
           memtaint(trust_domain.addr, trust_domain.size, 0) // S803
``` |
| ```
           memtaint_verify(untrust_domain.addr, untrust_domain.size, tag) // S804
           ra = get_return_address() // S805
           if (ra in untrust_domain) {
               ret = do_trust_api(service_id); // S805
           }
           memtaint(trust_domain.addr, trust_domain.size, PROT_RNG) // S806
           memtaint(untrust_domain.addr, untrust_domain.size, 0) // S807
           atomic_unlock() // S808
           return ret; // S808
``` |

The cross-domain access can be implemented by using the foregoing procedure.

In a possible design, before running any memory domain, the processor may execute MTE instruction clearing, to avoid a case in which the third-party code obtains a pointer tag by using an MTE instruction obtained without authorization to implement unauthorized access.

For example, before running the first memory domain, the processor detects, through offline or online binary scanning, whether the MTE instruction exists in the first memory domain; and if the MTE instruction exists, clears the MTE instruction.

The MTE instruction includes the following two types:
1. an instruction used to read a memory tag, for example, a load allocation tag (Load Allocation Tag, LDG) instruction or a load tag multiple (Load Tag Multiple, LDGM) instruction; and
2. an instruction used to set a memory tag, for example, one or more of a store allocation tag (Store Allocation Tag, STG) instruction, a store allocation tag and zeroing (Store Allocation Tag and Zeroing, STZG) instruction, a store allocation tag and pair register (Store Allocation Tag and Pair register, STGP) instruction, and a store tag multiple (Store Tag Multiple, STGM) instruction.

This can avoid a case in which the third-party code reads a valid memory tag or sets, without authorization, a memory tag by using the MTE instruction, so that an address tag is obtained by using the memory tag to implement unauthorized access to a memory domain. This further improves security and reliability of memory access.

In a possible design, when configuring an address of each memory domain, the processor may enable address space layout randomization (Address Space Layout Randomization, ASLR), to randomly configure the address of each memory domain.

It can be understood that when the ASLR is enabled, each time a program is run, a loaded executable file and a shared library are mapped to different addresses in virtual address space.

This can reduce a probability of the third-party code guessing a memory address, reduce a risk that a process of an application is intruded, and further improve reliability of the solution.

It may be understood that embodiments may be mutually combined to implement different technical effects.

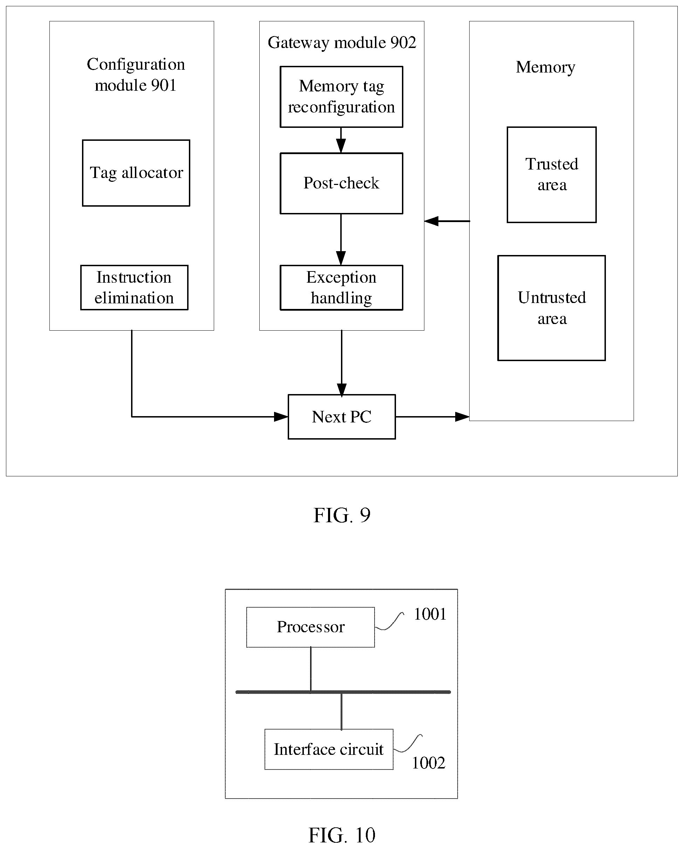

FIG. 9 is a diagram of a control apparatus according to an embodiment of this application. The control apparatus includes a configuration module 901 and a gateway module 902.

The configuration module is configured to perform an initialization process on a system, for example, allocate a memory tag to all memory domains (or a memory domain storing a sensitive asset), and scan and eliminate an MTE-sensitive instruction before any memory domain is run. In a possible example, as shown in FIG. 9, the configuration module may be further divided into a plurality of modules such as a tag allocator and an instruction elimination module, where the tag allocator is configured to: allocate a memory tag to a memory domain, modify a memory tag, and the like; and the instruction elimination module is configured to: perform offline or online binary scanning on the memory domain, and eliminate an MTE instruction when finding that the MTE instruction exists in the memory domain.

The gateway module is configured to implement a function of an API gateway, that is, control a cross-domain access process between memory domains. In a possible example, as shown in FIG. 9, the gateway module may be further divided into modules such as a memory tag reconfiguration module, a post-check module, and an exception handling module. A post-check function includes but is not limited to: checking whether a return address is normal; and after a memory tag is set, checking whether the memory tag is set correctly (for example, whether the memory tag is generated randomly). The exception handling module is configured to: when a verification exception occurs, handle the exception, for example, stop a service or report the exception.

A next PC in FIG. 9 is a next instruction (program counter), and indicates that after an instruction is executed, a next instruction continues to be executed. For example, the first instruction described above is one of the instructions.

For a specific implementation of the foregoing modules, refer to related descriptions in the foregoing method embodiments. Details are not described herein again.

It should be understood that all related content of the steps in the foregoing method embodiment may be cited in function descriptions of corresponding functional modules. Details are not described herein again.

Based on a same technical concept, with reference to FIG. 10, an embodiment of this application further provides a control apparatus. The apparatus includes at least one processor 1001 and an interface circuit 1002. The interface circuit 1002 is configured to: receive a signal from another apparatus different from the apparatus and transmit the signal to the processor 1001, or send a signal from the processor 1001 to another apparatus different from the apparatus. The processor 1001 is configured to implement the method in the foregoing method embodiment by using a logic circuit or executing a code instruction.

It should be understood that the processor mentioned in embodiments of this application may be implemented by hardware or by software. When the processor is implemented by the hardware, the processor may be a logic circuit, an integrated circuit, or the like. When the processor is implemented by the software, the processor may be a general-purpose processor, and is implemented by reading software code stored in a memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, a discrete hardware component, or the like. The general-purpose processor may be a microprocessor, or the processor may be any conventional processor or the like.

It should be understood that the memory mentioned in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example and not limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should be noted that the memory described in this specification aims to include but is not limited to these memories and any memory of another proper type.

Based on a same technical concept, an embodiment of this application further provides a computer-readable storage medium, including a program or instructions. When the program or the instructions are run on a computer, the method in the foregoing method embodiment is performed.

Based on a same technical concept, an embodiment of this application further provides a computer program product including instructions. The computer program product stores the instructions. When the instructions are run on a computer, the method in the foregoing method embodiment is performed.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A memory access control method, comprising:
configuring a memory tag for at least one memory domain, wherein a memory domain configured with a memory tag is only allowed to be accessed by an instruction that is associated with an address tag and for which the address tag matches the memory tag; and
before a first memory domain in the at least one memory domain is run, if the first memory domain is configured with a memory tag, releasing the memory tag of the first memory domain, wherein the first memory domain is any one of the at least one memory domain; or
running the first memory domain after determining that the first memory domain does not have a memory tag.

2. The method according to claim 1, wherein the configuring a memory tag for at least one memory domain comprises:
randomly generating the memory tag.

3. The method according to claim 1 or 2, wherein the configuring a memory tag for at least one memory domain comprises:
configuring a memory tag for a memory domain that is in the at least one memory domain and that stores a sensitive asset.

4. The method according to any one of claims 1 to 3, wherein after the running the first memory domain, the method further comprises:
detecting a first instruction from the first memory domain, wherein the first instruction is used to access a second memory domain;
configuring a memory tag for the first memory domain;
releasing a memory tag of the second memory domain;
executing the first instruction; and
returning an execution result of the first instruction to the first memory domain.

5. The method according to claim 4, wherein before the executing the first instruction, the method further comprises:
determining that the memory tag configured for the first memory domain is the randomly generated memory tag.

6. The method according to claim 4 or 5, wherein before the executing the first instruction, the method further comprises:
storing an address of the first memory domain; and
the returning an execution result of the first instruction to the first memory domain comprises:
returning the execution result of the first instruction to the first memory domain based on the stored address.

7. The method according to any one of claims 4 to 6, wherein after the executing the first instruction, the method further comprises:
configuring a memory tag for the second memory domain; and
releasing the memory tag of the first memory domain.

8. The method according to any one of claims 1 to 7, wherein before the running the first memory domain, the method further comprises:
detecting, through offline or online binary scanning, whether a memory tag extension MTE instruction exists in the first memory domain; and
if the MTE instruction exists, clearing the MTE instruction, wherein
the MTE instruction comprises one or more of a load allocation tag LDG instruction, a load tag multiple LDGM instruction, a store allocation tag STG instruction, a store allocation tag and zeroing STZG instruction, a store allocation tag and pair register STGP instruction, and a store tag multiple STGM instruction.

9. A control apparatus, comprising:
a configuration module, configured to: configure a memory tag for at least one memory domain, wherein a memory domain configured with a memory tag is only allowed to be accessed by an instruction that is associated with an address tag and for which the address tag matches the memory tag; and before a first memory domain in the at least one memory domain is run, if the first memory domain is configured with a memory tag, release the memory tag of the first memory domain, wherein the first memory domain is any one of the at least one memory domain; or run the first memory domain after determining that the first memory domain does not have a memory tag.

10. The apparatus according to claim 9, wherein the configuration module is configured to randomly generate the memory tag.

11. The apparatus according to claim 9 or 10, wherein the configuration module is used to configure a memory tag for a memory domain that is in the at least one memory domain and that stores a sensitive asset.

12. The apparatus according to any one of claims 9 to 11, wherein the apparatus further comprises:
a gateway module, configured to: detect a first instruction from the first memory domain, wherein the first instruction is used to access a second memory domain; configure a memory tag for the first memory domain; release a memory tag of the second memory domain; execute the first instruction; and return an execution result of the first instruction to the first memory domain.

13. The apparatus according to claim 12, wherein the gateway module is further configured to: before executing the first instruction, determine that the memory tag configured for the first memory domain is the randomly generated memory tag.

14. The apparatus according to claim 12 or 13, wherein the gateway module is further configured to: before executing the first instruction, store an address of the first memory domain; and when returning the execution result of the first instruction to the first memory domain, return the execution result of the first instruction to the first memory domain based on the stored address.

15. The apparatus according to any one of claims 12 to 14, wherein the gateway module is further configured to: configure a memory tag for the second memory domain after executing the first instruction; and release the memory tag of the first memory domain.

16. The apparatus according to any one of claims 9 to 15, wherein the configuration module is further configured to: before the first memory domain is run, detect, through offline or online binary scanning, whether a memory tag extension MTE instruction exists in the first memory domain; and if the MTE instruction exists, clear the MTE instruction, wherein the MTE instruction comprises one or more of a load allocation tag LDG instruction, a load tag multiple LDGM instruction, a store allocation tag STG instruction, a store allocation tag and zeroing STZG instruction, a store allocation tag and pair register STGP instruction, and a store tag multiple STGM instruction.

17. A control apparatus, comprising at least one processor and an interface circuit, wherein
the interface circuit is configured to: receive a signal from another apparatus different from the apparatus and transmit the signal to the processor, or send a signal from the processor to another apparatus different from the apparatus, and the processor is configured to implement the method according to any one of claims 1 to 8 by using a logic circuit or executing a code instruction.

18. A computer-readable storage medium, wherein the readable storage medium is configured to store instructions, and when the instructions are executed, the method according to any one of claims 1 to 8 is implemented.

19. A computer program product, wherein the computer program product stores instructions, and when the instructions are run on a computer, the computer is enabled to perform the method according to any one of claims 1 to 8.
